# EUROPÄISCHE PATENTSCHRIFT

(11) **EP 3 449 076 B1**
(45) Veröffentlichungstag und Bekanntmachung des Hinweises auf die Patenterteilung: **30.08.2023**
(21) Anmeldenummer: 17708152.8
(22) Anmeldetag: 24.02.2017
(51) Int. Cl.: E05F 1/10

(54) **MÖBELANTRIEB**
FURNITURE DRIVE
DISPOSITIF D'ENTRAÎNEMENT POUR MEUBLE

(30) Priorität: 28.04.2016 AT 503802016
(43) Veröffentlichungstag der Anmeldung: 06.03.2019
(73) Patentinhaber: Julius Blum GmbH, 6973 Höchst (AT)
(72) Erfinder: FLOGAUS, Alexander Simon, 88097 Eriskirch (DE); KOHLWEISS, Franz, 6971 Hard (AT)
(74) Vertreter: Torggler & Hofmann Patentanwälte - Innsbruck
(86) Internationale Anmeldenummer: PCT/AT2017/060045
(87) Internationale Veröffentlichungsnummer: WO 2017/185113

(56) Entgegenhaltungen:
- WO-A1-2006/005086
- AT-A4- 515 661

## Beschreibung

Die vorliegende Erfindung bezieht sich auf einen Möbelantrieb für ein relativ zu einem Möbelkorpus bewegbar gelagertes Möbelteil, umfassend:
- wenigstens einen schwenkbar gelagerten Stellarm zum Bewegen des bewegbaren Möbelteiles,
- eine Federvorrichtung zur Kraftbeaufschlagung des Stellarmes,
- einen Übertragungsmechanismus zum Übertragen einer Kraft der Federvorrichtung auf den Stellarm, wobei der Übertragungsmechanismus eine erste Stellkontur mit einem ersten Drehmomentverlauf und ein von der Federvorrichtung belastetes Druckstück aufweist, wobei das Druckstück bei einer
Bewegung des Stellarmes entlang der ersten Stellkontur verfahrbar ist.

Im Weiteren betrifft die Erfindung eine Anordnung mit einem Möbelantrieb der zu beschreibenden Art und mit einer Trägerkonstruktion zur Montage des Möbelantriebes an einem Möbelkorpus.

Ein Möbelantrieb dieser Art ist beispielsweise aus der AT 515661 und aus der WO 2006/005086 bereits bekannt.

Eine besondere Herausforderung bei Verwendung solcher Möbelantriebe besteht darin, dass das auf den Stellarm ausgeübte Drehmoment der Federvorrichtung an das jeweilige Gewicht und/oder an unterschiedliche Beladungszustände des bewegbaren Möbelteiles angepasst wird. Wenn dieses Drehmoment hinsichtlich des Gewichts und/oder hinsichtlich eines Beladungszustandes des Möbelteiles zu niedrig ist, so kann das bewegbare Möbelteil überhaupt nicht in eine angehobene Endlage relativ zu einem Möbelkorpus bewegt werden. Ist hingegen das auf den Stellarm wirkende Drehmoment zu hoch eingestellt, so ist es durchaus möglich, dass das bewegbare Möbelteil mit unangemessen hoher Kraft in die angehobene Endlage relativ zu einem Möbelkorpus hochschnellt.

Aufgabe der vorliegenden Erfindung ist es, einen Möbelantrieb der eingangs erwähnten Gattung vorzuschlagen, wobei eine verbesserte Anpassung an unterschiedliche Gewichte und/oder an unterschiedliche Beladungszustände des bewegbaren Möbelteiles möglich ist.

Dies wird erfindungsgemäß durch die Merkmale des Patentanspruchs 1 gelöst. Weitere vorteilhafte Ausgestaltungen der Erfindung sind in den abhängigen Ansprüchen angegeben.

Gemäß der Erfindung ist also vorgesehen, dass wenigstens eine zweite Stellkontur mit einem zweiten, vom ersten Drehmomentverlauf abweichenden, Drehmomentverlauf und eine Schaltvorrichtung vorgesehen sind, wobei durch die Schaltvorrichtung die wenigstens eine zweite Stellkontur mit dem Druckstück in Eingriff bringbar ist, sodass das Druckstück bei einer Bewegung des Stellarmes entlang der zweiten Stellkontur verfahrbar ist.

Die Schaltvorrichtung kann beispielsweise zumindest einen manuell oder mit einem Werkzeug zu betätigenden Schalter aufweisen, wobei durch eine Betätigung des Schalters zumindest eine zweite Stellkontur mit einem von der ersten Stellkontur abweichenden Drehmomentverlauf mit dem Druckstück in Eingriff bringbar ist. Der Schalter kann als mechanischer Schalter und/oder auch als elektrischer Schalter ausgeführt sein, welcher an einem Gehäuse des Möbelantriebes, am Möbelkorpus oder am bewegbaren Möbelteil anordenbar ist.

Gemäß einem Ausführungsbeispiel kann vorgesehen sein, dass der Möbelantrieb in Montagelage relativ zum Möbelkorpus durch zumindest ein Federelement begrenzt höhenbeweglich gelagert ist, sodass das bewegbare Möbelteil mit einem ersten Gewicht und/oder mit einem ersten Beladungszustand eine erste Höhenlage relativ zum Möbelkorpus und mit einem relativ zum ersten Gewicht höherem zweiten Gewicht und/oder mit einem relativ zum ersten Beladungszustand höherem zweiten Beladungszustand eine zweite Höhenlage relativ zum Möbelkorpus einnimmt, wobei die zweite Höhenlage gegenüber der ersten Höhenlage abgesenkt ist. Dabei kann vorgesehen sein, dass die Schaltvorrichtung in der zweiten Höhenlage, vorzugsweise selbsttätig, auslösbar ist, sodass das Druckstück bei einer Bewegung des Stellarmes entlang der zweiten Stellkontur verfahrbar ist.

Der Möbelantrieb kann somit über das zumindest eine Federelement relativ zum Möbelkorpus höhenbeweglich gelagert sein, wobei das Federelement durch ein unterschiedliches Gewicht des bewegbaren Möbelteiles und/oder durch einen unterschiedlichen Beladungszustand des bewegbaren Möbelteiles unterschiedlich komprimierbar oder dehnbar ist, wobei die Schaltvorrichtung bei Überschreitung eines vorgegebenen Komprimierungszustandes oder Dehnzustandes des Federelementes, vorzugsweise selbsttätig, auslösbar und das Druckstück bei einer Bewegung des Stellarmes entlang der zweiten Stellkontur verfahrbar ist.

Gemäß einem Ausführungsbeispiel kann vorgesehen sein, dass der Schalter der Schaltvorrichtung eine erste Stellung und eine zweite Stellung aufweist, wobei die erste Stellkontur in der ersten Stellung des Schalters verriegelbar und in der zweiten Stellung des Schalters entriegelbar ist. Der zumindest eine Schalter kann relativ zu einem Gehäuse des Möbelantriebes bewegbar angeordnet sein.

Gemäß einem Ausführungsbeispiel kann vorgesehen sein, dass jener Bereich der zweiten Stellkontur, welcher bei einer Bewegung des Stellarmes mit dem Druckstück in Kontakt tritt, eine geringeren radialen Abstand in Bezug zur Drehachse des Stellarmes und/oder eine stärkere Krümmung aufweist als jener Bereich der ersten Stellkontur, welcher bei einer Bewegung des Stellarmes mit dem Druckstück in Kontakt tritt.

Die erfindungsgemäße Anordnung weist einen Möbelantrieb der in Rede stehenden Art und eine Trägerkonstruktion zur Montage des Möbelantriebes an einem Möbelkorpus auf. Dabei kann vorgesehen sein, dass die Trägerkonstruktion einen am Möbelkorpus zu befestigenden ersten Träger und eine relativ zum ersten Träger, vorzugsweise in Montagelage vertikal, verschiebbar gelagerte erste Trägerschiene aufweist, wobei der Möbelantrieb an der ersten Trägerschiene gelagert ist. Dabei kann vorgesehen sein, dass der Schalter der Schaltvorrichtung am ersten Träger gelagert ist.

Weitere Einzelheiten und Vorteile der vorliegenden Erfindung werden anhand der nachfolgenden Figurenbeschreibung erläutert. Dabei zeigt bzw. zeigen:
- Fig. 1a, 1b: zwei Möbel mit einem Möbelkorpus und einem Möbelantrieb zum Bewegen eines bewegbaren Möbelteiles in perspektivischen Ansichten, wobei die bewegbaren Möbelteile ein unterschiedliches Gewicht aufweisen,
- Fig. 2a, 2b: ein weiteres Anwendungsgebiet des Möbelantriebes, durch den ein Möbelteil relativ zum Möbelkorpus zwischen einer angehobenen Schließstellung und einer abgesenkten Offenstellung höhenbeweglich gelagert ist,
- Fig. 3: der Möbelantrieb mit einer Trägerkonstruktion zur Befestigung an einem Möbelkorpus,
- Fig. 4: der Möbelantrieb in einer perspektivischen Ansicht, wobei durch die Schaltvorrichtung die erste Stellkontur verriegelt ist, sodass das Druckstück bei einer Bewegung des Stellarmes entlang der ersten Stellkontur verfahrbar ist,
- Fig. 5: der Möbelantrieb in einer perspektivischen Ansicht, wobei durch die Schaltvorrichtung die erste Stellkontur entriegelt ist, sodass das Druckstück bei einer Bewegung des Stellarmes entlang der zweiten Stellkontur verfahrbar ist,
- Fig. 6: der Möbelantrieb gemäß Figur 5 mit einer fortgesetzten Bewegung des Druckstückes entlang der zweiten Stellkontur,
- Fig. 7: der Möbelantrieb mit einer weiteren Schwenkstellung des Stellarmes,
- Fig. 8a-8c: der Möbelantrieb in einer ersten Höhenlage relativ zum Möbelkorpus sowie zwei vergrößerte Detailansichten hierzu,
- Fig. 9a-9c: der Möbelantrieb in einer zweiten, abgesenkten Höhenlage relativ zum Möbelkorpus sowie zwei vergrößerte Detailansichten hierzu,
- Fig. 10a, 10b: der Möbelantrieb in einer Seitenansicht, wobei das Druckstück einerseits entlang der ersten Stellkontur und andererseits entlang der zweiten Stellkontur verfahrbar ist.

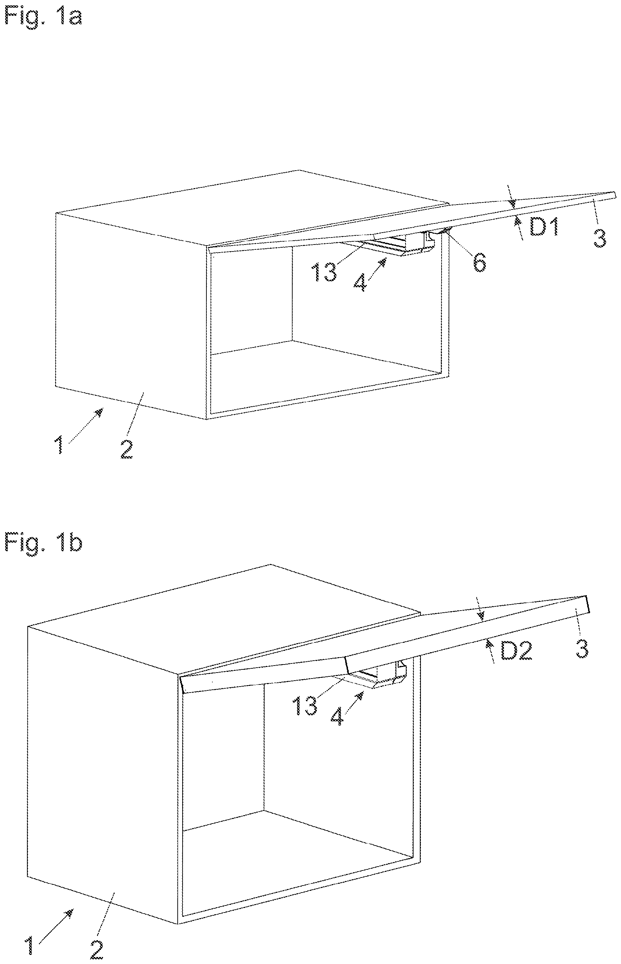

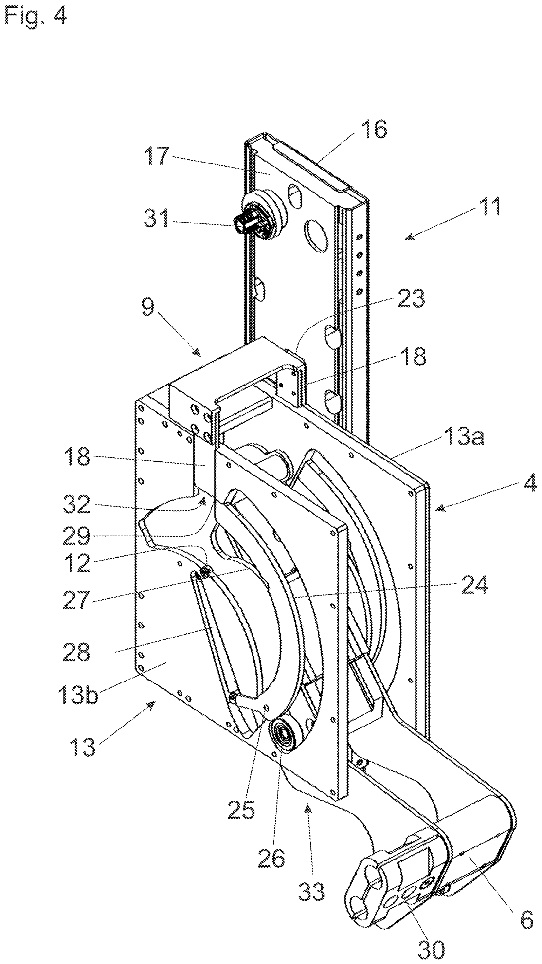

Fig. 1a und Fig. 1b zeigen jeweils ein Möbel 1 mit einem Möbelkorpus 2, wobei Möbelteile 3 durch einen Möbelantrieb 4 relativ zum Möbelkorpus 2 bewegbar gelagert sind. Der Möbelantrieb 4 umfasst jeweils ein am Möbelkorpus 2 zu befestigendes Gehäuse 13 und einen relativ zum Gehäuse 13 schwenkbaren Stellarm 6, sodass die bewegbaren Möbelteile 3 jeweils ausgehend von einer vertikalen Schließstellung in eine relativ zum Möbelkorpus 2 angehobene Lage bewegbar sind. Das bewegbare Möbelteil 3 in Fig. 1b weist eine größere Fläche und/oder eine höhere Materialstärke D2 und/oder ist aus einem schwereren Material als das bewegbare Möbelteil 3 in Fig. 1a gebildet, sodass das bewegbare Möbelteil 3 in Fig. 1b insgesamt ein höheres Gewicht als das in Fig. 1a gezeigte Möbelteil 3 mit der geringeren Materialstärke D1 aufweist. Durch die unterschiedlichen Gewichte und/oder unterschiedlichen Beladungszustände der bewegbaren Möbelteile 3 ist es notwendig, dass von ein und demselben Möbelantrieb 4 ein dem jeweiligen Gewicht der Möbelteile 3 entsprechendes Drehmoment auf den schwenkbaren Stellarm 6 aufgebracht wird. Durch eine hier nicht gezeigte Schaltvorrichtung 9 des Möbelantriebes 4 sind je nach Gewicht und/oder Beladungszustand des bewegbaren Möbelteiles 3 zumindest zwei Stellkonturen 24, 27 (Fig. 4) mit voneinander abweichenden Drehmomentverläufen, vorzugsweise selbsttätig, schaltbar. Durch diese Umschaltung kann beispielsweise eine erste Grobeinstellung des auf den Stellarm 6 ausgeübten Drehmomentes erfolgen, woraufhin durch eine (üblich vorgesehene) Einstellvorrichtung des Möbelantriebes 4 eine Feineinstellung des auf den Stellarm 6 ausgeübten Drehmomentes vorgenommen werden kann.

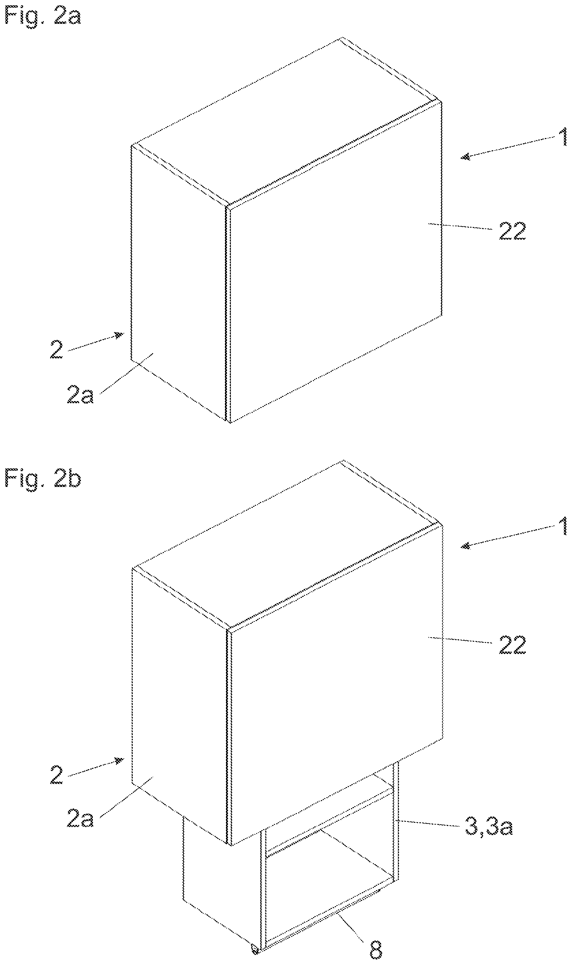

Fig. 2a und Fig. 2b zeigen ein weiteres Anwendungsgebiet des Möbelantriebes 4. Im gezeigten Ausführungsbeispiel umfasst das Möbel 1 einen Möbelkorpus 2 mit einem Außenkorpus 2a, wobei der Außenkorpus 2a durch eine Blende 22 verschlossen ist. Durch den (hier nicht ersichtlichen) Möbelantrieb 4 ist ein bewegbares Möbelteil 3 in Form eines Innenkorpus 3a relativ zum Außenkorpus 2a zwischen einer angehobenen Schließstellung und einer abgesenkten Offenstellung höhenbeweglich angeordnet. Der Innenkorpus 3a ist zur Aufnahme von Staugut ausgebildet und über einen Griff 8 relativ zum Außenkorpus 2a in einer senkrecht verlaufenden Richtung anhebbar und absenkbar.

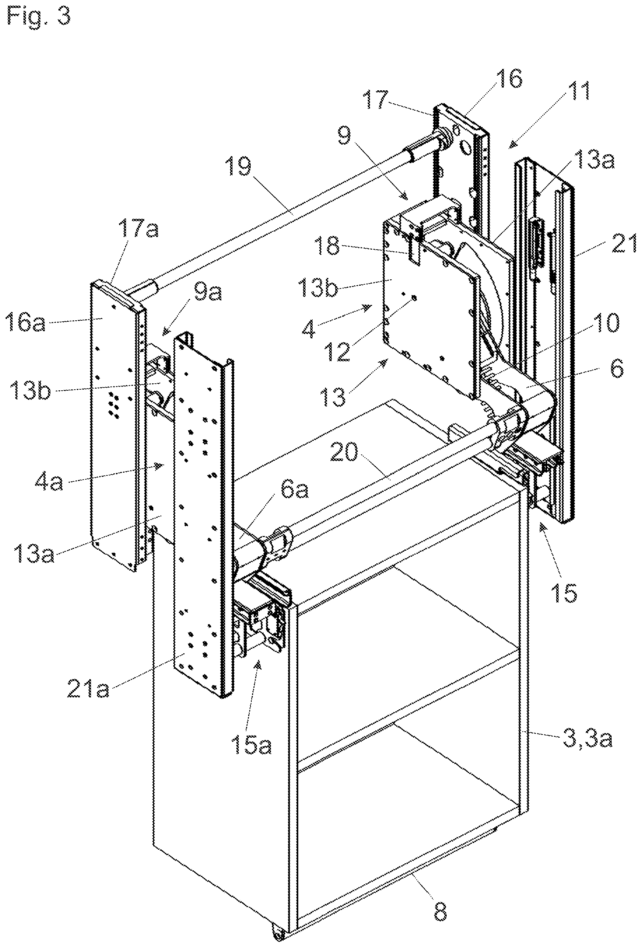

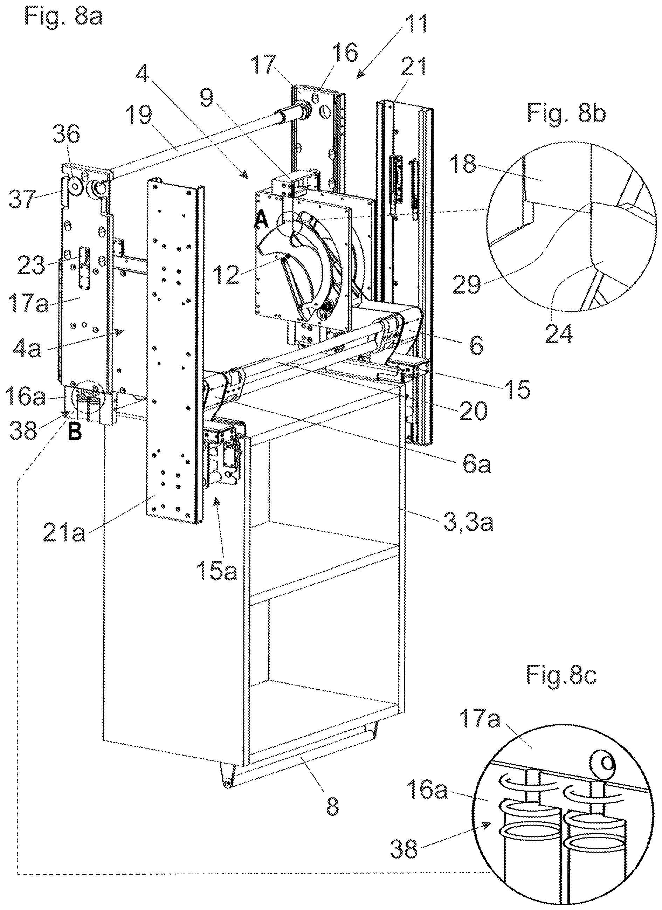

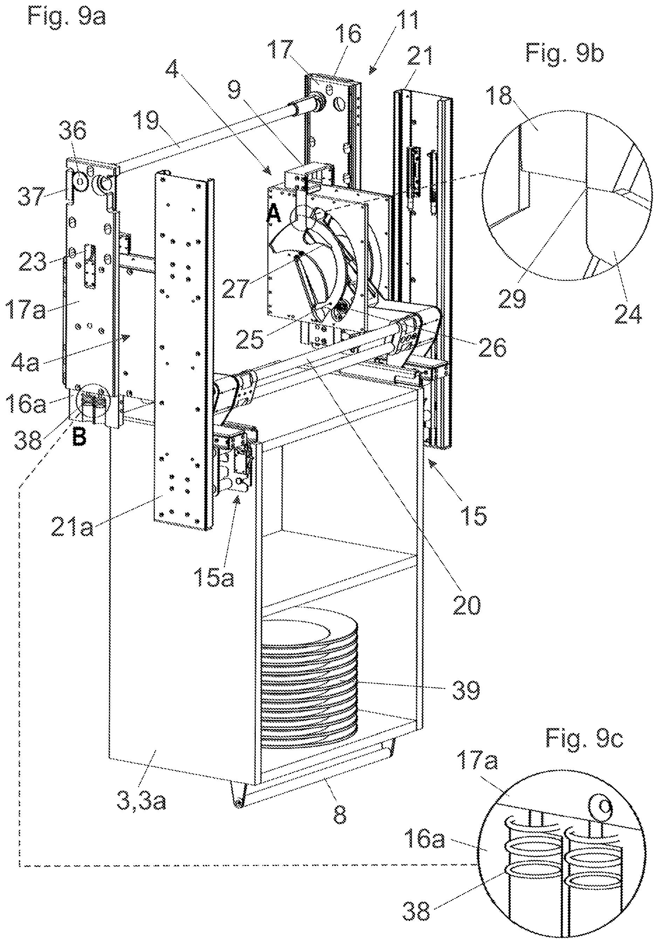

Fig. 3 zeigt das Möbel 1 gemäß Fig. 2a, wobei der Außenkorpus 2a und die den Außenkorpus 2a verdeckende Blende 22 nicht gezeigt sind. Der Möbelantrieb 4 weist ein Gehäuse 13 mit zwei zueinander parallel verlaufenden Gehäuseteilen 13a und 13b auf, zwischen denen ein von einer Federvorrichtung 10 (vorzugsweise mit zumindest einer als Schraubenfeder ausgebildeten Druckfeder) beaufschlagter Stellarm 6 um eine Drehachse 12 schwenkbar gelagert ist. Der Möbelantrieb 4 mit den Gehäuseteilen 13a, 13b ist an einer Trägerschiene 17 befestigt, welche relativ zu einem am Außenkorpus 2a zu befestigenden Träger 16 über Federelemente 38 (Fig. 8c, Fig. 9c) begrenzt höhenbeweglich gelagert ist. Durch eine Schaltvorrichtung 9, welche im gezeigten Ausführungsbeispiel zumindest einen mit dem Träger 16 verbundenen Schalter 18 aufweist, ist der Möbelantrieb 4 bei Überschreitung eines vorgegebenen Gewichtes und/oder Beladungszustandes des bewegbaren Möbelteiles 3 in einen Betriebsmodus mit einem veränderten Drehmomentverlauf schaltbar. Der schwenkbar gelagerte Stellarm 6 weist eine Befestigungsvorrichtung 15 zur Montage des Innenkorpus 3a auf, wobei der Innenkorpus 3a bei einer Bewegung des Stellarmes 6 entlang einer am Außenkorpus 2a zu befestigenden Linearführung 21 in einer senkrecht verlaufenden Richtung verschiebbar gelagert ist.

An einer gegenüberliegenden Seitenwand des Außenkorpus 2a ist ein zweiter Möbelantrieb 4a angeordnet, welcher identisch wie der erste Möbelantrieb 4 ausgebildet ist. Auch die zur Befestigung des zweiten Möbelantriebes 4a vorgesehene Trägervorrichtung 11 ist gleich aufgebaut. Bauteile 13, 14, 15, etc. des ersten Möbelantriebes 4 bzw. der Trägervorrichtung 11 entsprechen Bauteilen 13a, 14a, 15a, etc. des zweiten Möbelantriebes 4a bzw. der Trägervorrichtung 11. Eine Schwenkbewegung des Stellarmes 6 des ersten Möbelantriebes 4 ist über eine zweite Synchronisationsstange 20 mit einer Schwenkbewegung des Stellarmes 6a des zweiten Möbelantriebes 4a synchronisierbar. Die Trägerkonstruktion 11 umfasst ferner einen am Außenkorpus 2a zu befestigenden zweiten Träger 16a und eine relativ zum zweiten Träger 16a verschiebbar gelagerte zweite Trägerschiene 17a, wobei der zweite Möbelantrieb 4a an der zweiten verschiebbaren Trägerschiene 17a gelagert ist. Eine Vertikalbewegung des ersten Möbelantriebes 4 relativ zum ersten Träger 16 ist über eine erste Synchronisationsstange 19 mit einer Vertikalbewegung des zweiten Möbelantriebes 4a relativ zum zweiten Träger 16a synchronisierbar.

Fig. 4 zeigt den an der Trägerschiene 17 befestigten Möbelantrieb 4 in einer perspektivischen Ansicht. Der Träger 16 ist an einer Seitenwand des Außenkorpus 2a zu befestigen, die Trägerschiene 17 ist zusammen mit den Gehäuseteilen 13a, 13b des Möbelantriebes 4 relativ zum ortsfest gelagerten Träger 16 begrenzt höhenbeweglich gelagert. Über eine Welle 31 ist die jeweilige Höhenlage des Möbelantriebes 4 relativ zum Träger 16 auf die erste Synchronisationsstange 19 (Fig. 3) übertragbar. Die Trägerschiene 17 weist eine Ausnehmung 23 zum Durchtritt der Schaltvorrichtung 9 auf, sodass die beiden Schalter 18 der Schaltvorrichtung 9 jeweils mit dem am Außenkorpus 2a zu montierenden äußeren Träger 16 in Verbindung stehen. Somit sind die beiden Schalter 18 der Schaltvorrichtung 9 im gezeigten Ausführungsbeispiel relativ zum Außenkorpus 2a feststehend angeordnet. Die beiden Schalter 18 greifen jeweils in Führungen 32 der ihnen zugeordneten Gehäuseteile 13a, 13b ein und verriegeln dabei jeweils eine Kante 29 einer ersten Stellkontur 24 mit einem ersten vorgegebenen Drehmomentverlauf. Zum Übertragen der in Fig. 3 gezeigten Federvorrichtung 10 auf den um die Drehachse 12 schwenkbaren Stellarm 6 ist ein Übertragungsmechanismus 33 vorgesehen, welcher die erste Stellkontur 24 mit dem ersten Drehmomentverlauf und ein von der Federvorrichtung 10 belastetes Druckstück 26 umfasst, wobei das Druckstück 26 bei einer Bewegung des Stellarmes 6 entlang der ersten Stellkontur 24 verfahrbar ist. Im gezeigten Ausführungsbeispiel ist das Druckstück 26 als drehbar gelagerte Druckrolle ausgebildet, welche bei einer Bewegung des Stellarmes 6 entlang der ersten Stellkontur 24 abrollbar ist. Die erste Stellkontur 24 ist um eine Drehachse 25 schwenkbar gelagert und durch eine Rückstellfeder 28 in Form einer Zugfeder mit relativ geringer Federkraft beaufschlagt, sodass die erste Stellkontur 24 nach erfolgter Entriegelung (d.h. nachdem die Kante 29 der ersten Stellkontur 24 vom Schalter 18 entkoppelt wurde) wieder in Richtung Verriegelungsstellung drückbar ist. In der gezeigten Figur befindet sich der Stellarm 6 in einer Schwenklage, welche der abgesenkten Position des bewegbaren Möbelteiles 3 (Innenkorpus 3a) entspricht, wobei das Druckstück 26 bei einem Hochschwenken des Stellarmes 6 entlang der ersten Stellkontur 24 verfahrbar ist. Der Stellarm 6 weist einen Adapter 30 zur Befestigung der zweiten Synchronisationsstange 20 auf, durch welche eine Schwenkbewegung des Stellarmes 6 mit einer Schwenkbewegung des gegenüberliegenden Stellarmes 6a des zweiten Möbelantriebes 4a (Fig. 3) synchronisierbar ist. Unterhalb eines vorgegebenen Gewichtes und/oder unterhalb eines vorgegebenen Beladungszustandes des bewegbaren Möbelteiles 3 (Innenkorpus 3a) ist das Druckstück 26 bei einer Bewegung des Stellarmes 6 entlang der ersten Stellkontur 24 verfahrbar gelagert.

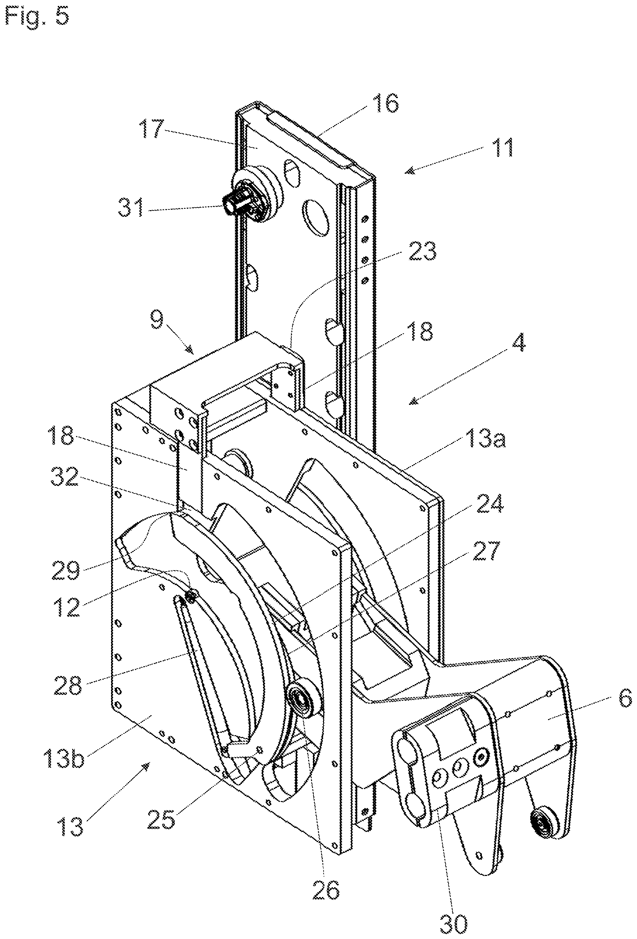

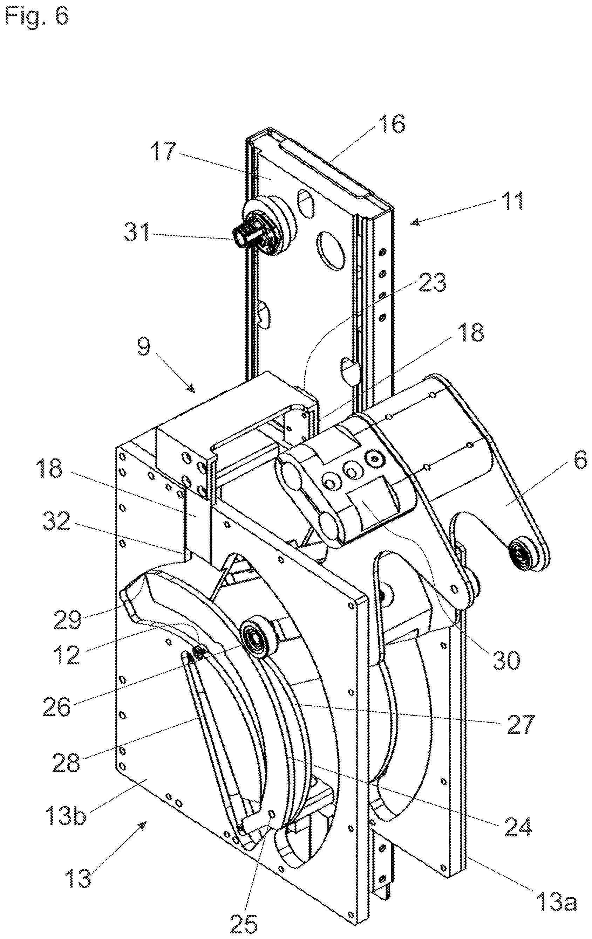

Fig. 5 zeigt den Möbelantrieb 4, welcher durch eine zusätzliche Beladung des Innenkorpus 3a relativ zum feststehenden Träger 16 abgesenkt wurde. Die Gehäuseteile 13a, 13b sind jeweils mit Führungen 32 versehen, in welche die Schalter 18 der Schaltvorrichtung 9 eingreifen und damit eine Vertikalbewegung zwischen den Schaltern 18 und dem Gehäuse 13 des Möbelantriebes 4 ermöglichen. Durch die Absenkung des Möbelantriebes 4 relativ zum Träger 16 ist die Kante 29 der ersten Stellkontur 24 von den Schaltern 18 entkoppelbar, wobei die erste Stellkontur 24 durch das von der Federvorrichtung 10 (Fig. 6) belastete Druckstück 26 im Gegenuhrzeigersinn weggedrückt wird und das Druckstück 26 nunmehr mit einer zweiten Stellkontur 27, welche einen von der ersten Stellkontur 24 abweichenden Drehmomentverlauf aufweist, in Eingriff bringbar ist. Während die erste Stellkontur 24 relativ zur Drehachse 12 des Stellarmes 6, vorzugsweise um die Drehachse 25, beweglich gelagert ist, so ist die zweite Stellkontur 27 relativ zur Drehachse 12 des Stellarmes 6 feststehend ausgebildet. Vorzugsweise ist vorgesehen, dass die zweite Stellkontur 27 zusammen mit den Gehäuseteilen 13a, 13b des Möbelantriebes 4 einstückig ausgebildet ist.

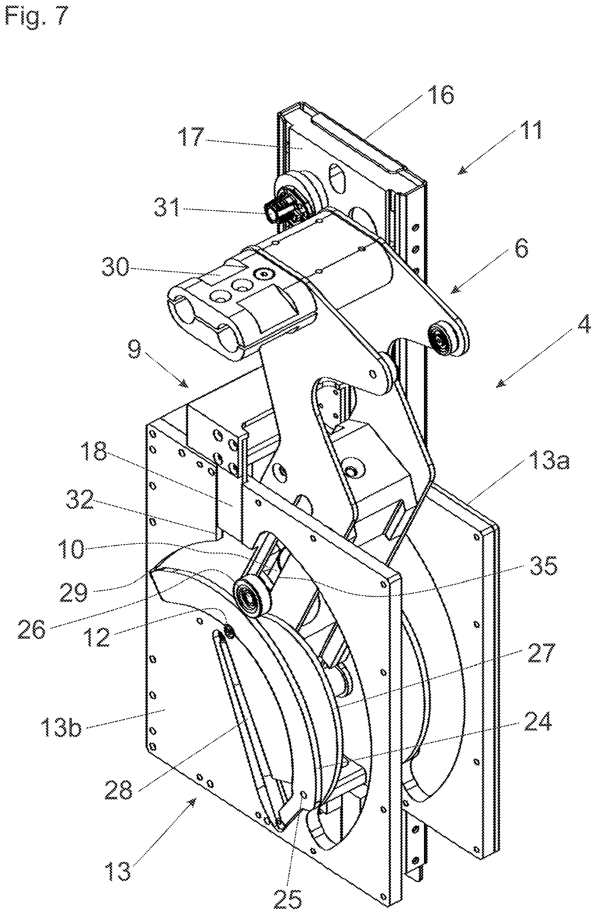

Fig. 7 zeigt den Möbelantrieb 4 mit dem Stellarm 6 in einer oberen Endlage, welche mit der geschlossenen Stellung des Innenkorpus 3a relativ zum Außenkorpus 2a korrespondiert. Das Druckstück 26 wurde also ausgehend von der Fig. 5 entlang der zweiten Stellkontur 27 verfahren. Der Stellarm 6 weist ein Langloch 35 auf, entlang welchem das von der Federvorrichtung 10 belastete Druckstück 26 begrenzt verschiebbar gelagert ist.

Fig. 8a zeigt die beiden gegenüberliegenden Möbelantriebe 4 und 4a, welche über die Trägerkonstruktion 11 an einem Möbelkorpus 2 (Fig. 2b) zu befestigen sind. Von der linken (zweiten) Trägerschiene 17a wurde die Abdeckung entfernt, sodass ein an einem zweiten Endbereich der ersten Synchronisationsstange 19 angeordnetes Zahnrad 36 ersichtlich ist. Am ersten Endbereich der ersten Synchronisationsstange 19 ist ein (hier nicht ersichtliches) erstes Zahnrad 36 angeordnet, wobei das erste Zahnrad 36 und das zweite Zahnrad 36 jeweils drehfest mit der ersten Synchronisationsstange 19 verbunden sind und jeweils mit einer Verzahnung 37 des Trägers 16a zusammenwirken. Auf diese Weise sind die Vertikalbewegungen der Trägerschienen 17, 17a (und damit eine Vertikalbewegung der Möbelantriebe 4, 4a) über die erste Synchronisationsstange 19 miteinander synchronisierbar. Fig. 8b zeigt den in Figur 8a eingekreisten Bereich A in einer vergrößerten Ansicht, wobei die erste Stellkontur 24 über die Kante 29 mit dem Schalter 18 der Schaltvorrichtung 9 verriegelt ist, sodass das Druckstück 26 bei einer Bewegung des Stellarmes 6 entlang der ersten Stellkontur 24 verfahrbar ist. Fig. 8c zeigt den in Figur 8a eingekreisten Bereich B in einer vergrößerten Ansicht, wobei die Trägerschiene 17a über zumindest ein Federelement 38 relativ zum Träger 16a abgestützt ist, sodass die Trägerschiene 17a (und damit die Möbelantriebe 4, 4a) relativ zum Träger 16 begrenzt höhenbeweglich gelagert ist. Das bewegbare Möbelteil 3 nimmt bei einem ersten Gewicht und/oder bei einem ersten Beladungszustand eine erste Höhenlage relativ zum Möbelkorpus 2 (und damit zu den Trägern 16, 16a) ein.

Fig. 9a zeigt die beiden Möbelantriebe 4, 4a in einer gegenüber Fig. 8a abgesenkten Lage relativ zu einem Möbelkorpus 2. Wird das bewegbare Möbelteil 3 (Innenkorpus 3a) durch Staugut 39 (im vorliegenden Fall durch einen Tellerstapel symbolisiert) belastet, so werden die mit den Trägerschienen 17, 17a verbundenen Möbelantriebe 4, 4a entgegen der Kraft des Federelementes 38 (welches im vorliegenden Fall durch zwei oder mehrere zueinander parallel geschaltete Druckfedern gebildet ist) relativ zu den feststehenden Trägern 16, 16a abgesenkt und nehmen damit eine zweite, abgesenkte Höhenlage relativ zum Möbelkorpus 2 ein. Wie aus der Detailansicht gemäß Fig. 9b hervorgeht, wird durch diese zusätzliche Belastung mit Staugut 39 auch die erste Stellkontur 24 von dem mit dem Träger 16 verbundenen Schalter 18 entkoppelt, sodass die Kante 29 der ersten Stellkontur 24 vom Schalter 18 entriegelt wird. Die entriegelte Stellkontur 24 wird durch das von der Federvorrichtung 10 (Fig. 3) belastete Druckstück 26 um die Drehachse 25 verschwenkt, sodass das Druckstück 26 entlang der zweiten Stellkontur 27 verfahrbar ist. Dabei kann vorgesehen sein, dass die zweite Stellkontur 27 einen gegenüber der ersten Stellkontur 24 erhöhten Drehmomentverlauf aufweist, sodass das bewegbare Möbelteil 3 auch bei einer zusätzlichen Beladung durch Staugut 39 entlang der Linearführung 21 in die angehobene Endlage relativ zum Möbelkorpus 2 verfahrbar ist.

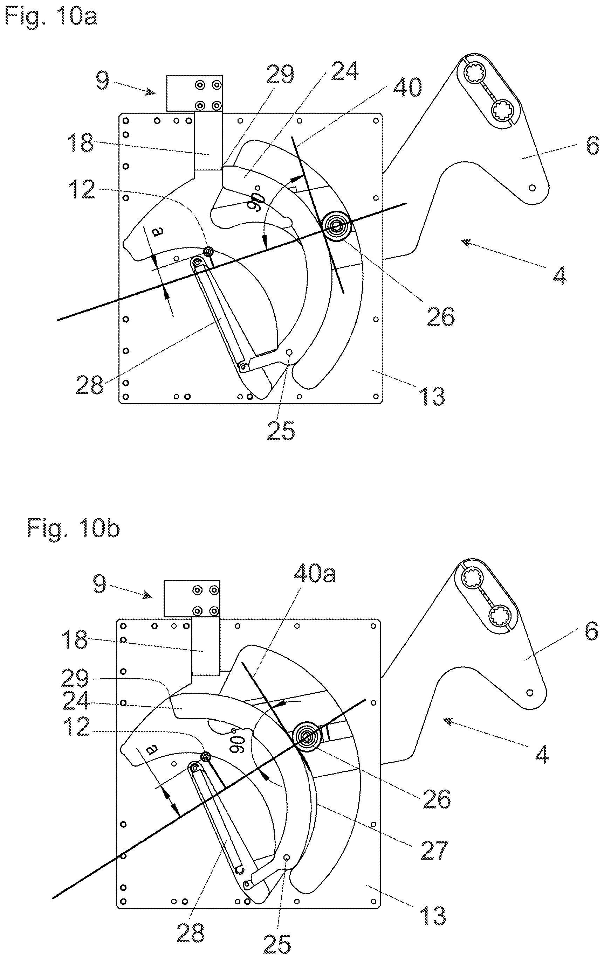

Fig. 10a zeigt den Möbelantrieb 4, wobei das Druckstück 26 durch eine Bewegung des Stellarmes 6 um die Drehachse 12 entlang der ersten konvexen Stellkontur 24 verfahrbar gelagert ist. Eine zu einer Tangente 40 zwischen Druckstück 26 und erster Stellkontur 24 verlaufende Senkrechte ergibt einen ersten Hebelarm a in Bezug zur Drehachse 12 des Stellarmes.

Fig. 10b zeigt hingegen die vom Schalter 18 entkoppelte erste Stellkontur 24, sodass das Druckstück 26 durch eine Bewegung des Stellarmes 6 um die Drehachse 12 entlang der zweiten konvexen Stellkontur 27 verfahrbar ist. Eine zu einer Tangente 40a zwischen Druckstück 26 und zweiter Stellkontur 27 verlaufende Senkrechte ergibt einen zweiten Hebelarm a in Bezug zur Drehachse 12 des Stellarmes 6. Aus einem direkten Vergleich ist zu erkennen, dass der zweite Hebelarm a gemäß Fig. 10b länger als jener in Fig. 10a ist. Das jeweilige Drehmoment ergibt sich aus Kraft mal Hebelarm (Formel M=F*a), sodass sich also bei Verwendung der zweiten Stellkontur 27 gemäß Fig. 10b mit dem längeren zweiten Hebelarm a ein höherer Drehmomentverlauf als bei Verwendung der ersten Stellkontur 24 gemäß Fig. 10a ergibt.

## Patentansprüche

1. Möbelantrieb (4) für ein relativ zu einem Möbelkorpus (2) bewegbar gelagertes Möbelteil (3), umfassend:
- wenigstens einen schwenkbar gelagerten Stellarm (6) zum Bewegen des bewegbaren Möbelteiles (3),
- eine Federvorrichtung (10) zur Kraftbeaufschlagung des Stellarmes (6),
- einen Übertragungsmechanismus (33) zum Übertragen einer Kraft der Federvorrichtung (10) auf den Stellarm (6), wobei der Übertragungsmechanismus (33) eine erste Stellkontur (24) mit einem ersten Drehmomentverlauf und ein von der Federvorrichtung (10) belastetes Druckstück (26) aufweist, wobei das Druckstück (26) bei einer Bewegung des Stellarmes (6) entlang der ersten Stellkontur (24) verfahrbar ist,
**dadurch gekennzeichnet, dass** wenigstens eine zweite Stellkontur (27) mit einem zweiten, vom ersten Drehmomentverlauf abweichenden, Drehmomentverlauf und eine Schaltvorrichtung (9) vorgesehen sind, wobei durch die Schaltvorrichtung (9) die wenigstens eine zweite Stellkontur (27) mit dem Druckstück (26) in Eingriff bringbar ist, sodass das Druckstück (26) bei einer Bewegung des Stellarmes (6) entlang der zweiten Stellkontur (27) verfahrbar ist.

2. Möbelantrieb nach Anspruch 1, **dadurch gekennzeichnet, dass** die Schaltvorrichtung (9) zumindest einen Schalter (18) aufweist, wobei der Schalter (18) eine erste Stellung und eine zweite Stellung aufweist, wobei die erste Stellkontur (24) in der ersten Stellung des Schalters (18) verriegelbar und in der zweiten Stellung des Schalters (18) entriegelbar ist.

3. Möbelantrieb nach Anspruch 2, **dadurch gekennzeichnet, dass** die erste Stellkontur (24) durch eine Rückstellfeder (28) in Richtung der ersten Stellung, in welcher die erste Stellkontur (24) mit dem Schalter (18) verriegelbar ist, vorgespannt ist.

4. Möbelantrieb nach einem der Ansprüche 1 bis 3, **dadurch gekennzeichnet, dass** die erste Stellkontur (24) um eine Drehachse (25) schwenkbar gelagert ist.

5. Möbelantrieb nach einem der Ansprüche 1 bis 4, **dadurch gekennzeichnet, dass** die zweite Stellkontur (27) relativ zur Drehachse (12) des Stellarmes (6) feststehend ausgebildet ist.

6. Möbelantrieb nach einem der Ansprüche 1 bis 5, **dadurch gekennzeichnet, dass** der Möbelantrieb (4) in Montagelage relativ zum Möbelkorpus (2) durch zumindest ein Federelement (38) begrenzt höhenbeweglich gelagert ist, sodass das bewegbare Möbelteil (3) mit einem ersten Gewicht und/oder mit einem ersten Beladungszustand eine erste Höhenlage relativ zum Möbelkorpus (2) und mit einem relativ zum ersten Gewicht höherem zweiten Gewicht und/oder mit einem relativ zum ersten Beladungszustand höherem zweiten Beladungszustand eine zweite Höhenlage relativ zum Möbelkorpus (2) einnimmt, wobei die zweite Höhenlage gegenüber der ersten Höhenlage abgesenkt ist.

7. Möbelantrieb nach Anspruch 6, **dadurch gekennzeichnet, dass** die Schaltvorrichtung (9) in der zweiten Höhenlage auslösbar ist.

8. Möbelantrieb nach einem der Ansprüche 1 bis 7, **dadurch gekennzeichnet, dass** die Schaltvorrichtung (9) manuell auslösbar und/oder durch ein unterschiedliches Gewicht und/oder durch einen unterschiedlichen Beladungszustand des bewegbaren Möbelteiles (3) selbsttätig auslösbar ist.

9. Anordnung mit einem Möbelantrieb (4) nach einem der Ansprüche 1 bis 8 und mit einer Trägerkonstruktion (11) zur Montage des Möbelantriebes (4) an einem Möbelkorpus (2).

10. Anordnung nach Anspruch 9, **dadurch gekennzeichnet, dass** die Trägerkonstruktion (11) einen am Möbelkorpus (2) zu befestigenden ersten Träger (16) und eine relativ zum ersten Träger (16), vorzugsweise in Montagelage vertikal, verschiebbar gelagerte erste Trägerschiene (17) aufweist, wobei der Möbelantrieb (4) an der ersten Trägerschiene (17) gelagert ist.

11. Anordnung nach Anspruch 10, **dadurch gekennzeichnet, dass** der Schalter (18) der Schaltvorrichtung (9) am ersten Träger (16) angeordnet ist.

12. Anordnung nach Anspruch 10 oder 11, **dadurch gekennzeichnet, dass** die Trägerkonstruktion (11) einen am Möbelkorpus (2) zu befestigenden zweiten Träger (16a) und eine relativ zum zweiten Träger (16a), vorzugsweise vertikal, verschiebbar gelagerte zweite Trägerschiene (17a) aufweist, wobei ein zweiter Möbelantrieb (4a) an der zweiten Trägerschiene (17) gelagert ist.

13. Anordnung nach Anspruch 12, **dadurch gekennzeichnet, dass** eine Vertikalbewegung des ersten Möbelantriebes (4) relativ zum ersten Träger (16) mit einer Vertikalbewegung des zweiten Möbelantriebes (4a) relativ zum zweiten Träger (16a) über eine erste Synchronisationsstange (19) miteinander synchronisierbar sind.

14. Anordnung nach Anspruch 13, **dadurch gekennzeichnet, dass** die erste Synchronisationsstange (19) einen ersten Endbereich mit einem ersten Zahnrad (36) und einen zweiten Endbereich mit einem zweiten Zahnrad (36) aufweist, wobei das erste Zahnrad (36) und das zweite Zahnrad (36) jeweils drehfest mit der ersten Synchronisationsstange (19) verbunden sind, wobei das erste Zahnrad (36) mit einer ersten Verzahnung (37) des ersten Trägers (16) und das zweite Zahnrad (36) mit einer zweiten Verzahnung (37) des zweiten Trägers (16a) zusammenwirkt.

15. Anordnung nach einem der Ansprüche 12 bis 14, **dadurch gekennzeichnet, dass** eine Schwenkbewegung des Stellarmes (6) des ersten Möbelantriebes (4) mit einer Schwenkbewegung des Stellarmes (6a) des zweiten Möbelantriebes (4a) über eine zweite Synchronisationsstange (20) miteinander synchronisierbar ist.

## Claims

1. A furniture drive (4) for a furniture part (3) movably-supported relative to a furniture carcass (2), comprising:
- at least one pivotally mounted actuating arm (6) for moving the movable furniture part (3),
- a spring device (10) for applying a force to the actuating arm (6),
- a transmission mechanism (33) for transmitting a force from the spring device (10) to the actuating arm (6), wherein the transmission mechanism (33) includes a first setting contour (24) having a first torque progression and a pressure portion (26) pressurized by the spring device (10), wherein the pressure portion (26) is configured to run along the first setting contour (24) upon a movement of the actuating arm (6),
**characterized in that** at least one second setting contour (27) having a second torque progression deviating from the first torque progression and a switching device (9) are provided, wherein by the switching device (9), the at least one second setting contour (27) can be engaged with the pressure portion (26), so that the pressure portion (26) is displaceable along the second setting contour (27) upon a movement of the actuating arm (6).

2. The furniture drive according to claim 1, **characterized in that** the switching device (9) includes at least one switch (18), wherein the switch (18) has first position and a second position, wherein the first setting contour (24), in the first position of the switch (18), can be locked, and in the second position of the switch (18), can be unlocked.

3. The furniture drive according to claim 2, **characterized in that** the first setting contour (24) is pre-stressed by a return spring (28) in a direction of the first position in which the first setting contour (24) can be locked to the switch (18).

4. The furniture drive according to one of the claims 1 to 3, **characterized in that** the first setting contour (24) is pivotally mounted about a pivoting axis (25).

5. The furniture drive according to one of the claims 1 to 4, **characterized in that** the second setting contour (27) is configured so as to be stationary relative to the pivoting axis (12) of the actuating arm (6).

6. The furniture drive according to one of the claims 1 to 5, **characterized in that** the furniture drive (4), in the mounting position, is movably supported relative to the furniture carcass (2) in a height direction to a limited extent by at least one spring element (38), so that the movable furniture part (3) having a first weight and/or having a first loading condition adopts a first height position relative to the furniture carcass (2), and when the movable furniture part (3) has a second weight higher than the first weight and/or has a second loading condition higher than the first loading condition, the movable furniture part (3) adopts a second height position relative to the furniture carcass (2), wherein the second height position is lowered with respect to the first height position.

7. The furniture drive according to claim 6, **characterized in that** the switching device (9) can be triggered in the second height position.

8. The furniture drive according to one of the claims 1 to 7, **characterized in that** the switching device (9) can be triggered manually and/or can be automatically triggered by a different weight and/or by a different loading condition of the movable furniture part (3).

9. An arrangement with a furniture drive (4) according to one of the claims 1 to 8 and with a supporting structure (11) for mounting the furniture drive (4) to a furniture carcass (2).

10. The arrangement according to claim 9, **characterized in that** the supporting structure (11) includes a first carrier member (16) configured to be fixed to a furniture carcass (2) and a first carrier rail (17) displaceable, preferably vertically in the mounting position, relative to the first carrier member (16), wherein the furniture drive (4) is supported on the first carrier rail (17).

11. The arrangement according to claim 10, **characterized in that** the switch (18) of the switching device (9) is arranged on the first carrier member (16).

12. The arrangement according to claim 10 or 11, **characterized in that** the supporting structure (11) includes a second carrier member (16a) configured to be fixed to furniture carcass (2) and a second carrier rail (17a) displaceable, preferably vertically in the mounting position, relative to the second carrier member (16a), wherein a second furniture drive (4a) is supported on the second carrier rail (17a).

13. The arrangement according to claim 12, **characterized in that** a first synchronization rod (19) is provided by which a vertical movement of the first furniture drive (4) relative to the first carrier member (16) and a vertical movement of the second furniture drive (4a) relative to the second carrier member (16a) can be synchronized with one another.

14. The arrangement according to claim 13, **characterized in that** the first synchronization rod (19) has a first end portion with a first gear (36) and a second end portion with a second gear (36), wherein each of the first gear (36) and second gear (36) is connected to the first synchronization rod (19) in a non-rotatable manner, wherein the first gear (36) co-operates with a first tooth arrangement (37) of the first carrier member (16) and the second gear (36) co-operates with a second tooth arrangement (37) of the second carrier member (16a) .

15. The arrangement according to one of the claims 12 to 14, **characterized in that** a second synchronization rod (20) is provided by which a pivotal movement of the actuating arm (6) of the first furniture drive (4) and a pivotal movement of the actuating arm (6a) of the second furniture drive (4a) can be synchronized with one another.

## Revendications

1. Entraînement de meuble (4) pour une partie de meuble (3) montée de manière à pouvoir être déplacée par rapport à un corps de meuble (2), comprenant:
- au moins un bras de réglage (6) monté de manière à pouvoir pivoter destiné à déplacer la partie de meuble (3) pouvant être déplacée,
- un dispositif de ressort (10) destiné à soumettre le bras de réglage (6) à l'action d'une force,
- un mécanisme de transmission (33) destiné à transmettre une force du dispositif de ressort (10) sur le bras de réglage (6), dans lequel le mécanisme de transmission (33) présente un premier contour de réglage (24) avec un premier profil de couple de rotation et une pièce de pression (26) contrainte par le dispositif de ressort (10), dans lequel la pièce de pression (26) peut être déplacée lors d'un déplacement du bras de réglage (6) le long du premier contour de réglage (24),
**caractérisé en ce qu'**au moins un deuxième contour de réglage (27) avec un deuxième profil de couple de rotation divergeant du premier profil de couple de rotation et un dispositif de commutation (9) sont prévus, dans lequel l'au moins un deuxième contour de réglage (27) peut être amené en prise avec la pièce de pression (26) par le dispositif de commutation (9) si bien que la pièce de pression (26) peut être déplacée lors d'un déplacement du bras de réglage (6) le long du deuxième contour de réglage (27).

2. Entraînement de meuble selon la revendication 1, **caractérisé en ce que** le dispositif de commutation (9) présente au moins un commutateur (18), dans lequel le commutateur (18) présente une première position et une deuxième position, dans lequel le premier contour de réglage (24) peut être verrouillé dans la première position du commutateur (18) et peut être déverrouillé dans la deuxième position du commutateur (18).

3. Entraînement de meuble selon la revendication 2, **caractérisé en ce que** le premier contour de réglage (24) est précontraint par un ressort de rappel (28) en direction de la première position, dans laquelle le premier contour de réglage (24) peut être verrouillé avec le commutateur (18).

4. Entraînement de meuble selon l'une quelconque des revendications 1 à 3, **caractérisé en ce que** le premier contour de réglage (24) est monté de manière à pouvoir pivoter autour d'un axe de rotation (25).

5. Entraînement de meuble selon l'une quelconque des revendications 1 à 4, **caractérisé en ce que** le deuxième contour de réglage (27) est réalisé de manière immobile par rapport à l'axe de rotation (12) du bras de réglage (6).

6. Entraînement de meuble selon l'une quelconque des revendications 1 à 5, **caractérisé en ce que** l'entraînement de meuble (4) est monté avec une mobilité en hauteur limitée par au moins un élément de ressort (38) en position de montage par rapport au corps de meuble (2) si bien que la partie de meuble (3) pouvant être déplacée adopte une première position en hauteur par rapport au corps de meuble (2) avec un premier poids et/ou avec un premier état de charge et une deuxième position en hauteur par rapport au corps de meuble (2) avec un deuxième poids plus élevé par rapport au premier poids et/ou avec un deuxième état de charge plus élevé par rapport au premier état de charge, dans lequel la deuxième position en hauteur est abaissée par rapport à la première position en hauteur.

7. Entraînement de meuble selon la revendication 6, **caractérisé en ce que** le dispositif de commutation (9) peut être déclenché dans la deuxième position en hauteur.

8. Entraînement de meuble selon l'une quelconque des revendications 1 à 7, **caractérisé en ce que** le dispositif de commutation (9) peut être déclenché manuellement et/ou peut être déclenché de manière autonome par un poids différent et/ou par un état de charge différent de la partie de meuble (3) pouvant être déplacée.

9. Ensemble avec un entraînement de meuble (4) selon l'une quelconque des revendications 1 à 8 et avec une structure de support (11) destinée au montage de l'entraînement de meuble (4) sur un corps de meuble (2).

10. Ensemble selon la revendication 9, **caractérisé en ce que** la structure de support (11) présente un premier support (16) à fixer sur le corps de meuble (2) et un premier rail de support (17) monté de manière à pouvoir coulisser par rapport au premier support (16), de préférence de manière verticale en position de montage, dans lequel l'entraînement de meuble (4) est monté sur le premier rail de support (17).

11. Ensemble selon la revendication 10, **caractérisé en ce que** le commutateur (18) du dispositif de commutation (9) est disposé sur le premier support (16).

12. Ensemble selon la revendication 10 ou 11, **caractérisé en ce que** la structure de support (11) présente un deuxième support (16a) à fixer sur le corps de meuble (2) et un deuxième rail de support (17a) monté de manière à pouvoir coulisser par rapport au deuxième support (16a), de préférence de manière verticale, dans lequel un deuxième entraînement de meuble (4a) est monté sur le deuxième rail de support (17a).

13. Ensemble selon la revendication 12, **caractérisé en ce qu'**un déplacement vertical du premier entraînement de meuble (4) par rapport au premier support (16) peut être synchronisé avec un déplacement vertical du deuxième entraînement de meuble (4a) par rapport au deuxième support (16a) par l'intermédiaire d'une première tige de synchronisation (19).

14. Ensemble selon la revendication 13, **caractérisé en ce que** la première tige de synchronisation (19) présente une première zone d'extrémité avec une première roue dentée (36) et une deuxième zone d'extrémité avec une deuxième roue dentée (36), dans lequel la première roue dentée (36) et la deuxième roue dentée (36) sont reliées respectivement de manière solidaire en rotation à la première tige de synchronisation (19), dans lequel la première roue dentée (36) coopère avec une première denture (37) du premier support (16) et la deuxième roue dentée (36) coopère avec une deuxième denture (37) du deuxième support (16a).

15. Ensemble selon l'une quelconque des revendications 12 à 14, **caractérisé en ce qu'**un déplacement par pivotement du bras de réglage (6) du premier entraînement de meuble (4) peut être synchronisé avec un déplacement par pivotement du bras de réglage (6a) du deuxième entraînement de meuble (4a) par l'intermédiaire d'une deuxième tige de synchronisation (20).
